# EUROPEAN PATENT APPLICATION

(11) **EP 4 156 074 A1**
(43) Date of publication of application: **29.03.2023**
(21) Application number: 20947413.9
(22) Date of filing: 28.07.2020
(51) Int. Cl.: G06Q 50/12, G06Q 10/02

(54) **FACILITY PRESENTATION DEVICE AND FACILITY PRESENTATION METHOD**

(71) Applicant: MITSUBISHI ELECTRIC CORPORATION, Chiyoda-ku Tokyo 100-8310 (JP)
(72) Inventor: SAIKAWA, Yoshinori, Tokyo 100-8310 (JP); KOBAYASHI, Sayaka, Tokyo 100-8310 (JP); YOSHIDA, Kazufumi, Tokyo 100-8310 (JP)
(74) Representative: Pfenning, Meinig & Partner mbB
(86) International application number: PCT/JP2020/028941
(87) International publication number: WO 2022/024231

(57) **Abstract**

A facility presentation device (100) includes: a departure place acquiring unit (110) to acquire departure place information indicating a departure place; an available facility acquiring unit (120) to search for an available facility on the basis of the departure place information and to acquire available facility information for each facility indicating one or more available facilities obtained as a search result, the available facility information including facility name information indicating a name of a facility corresponding to the available facility information; a guidance basics acquiring unit (130) to acquire guidance basic information regarding a facility that a business operator wants to guide to; a priority determining unit (140) to determine a priority of the facility that the business operator wants to guide to on the basis of the guidance basic information; an available facility list acquiring unit (190) to acquire available facility list information in which one or more pieces of available facility information acquired by the available facility acquiring unit (120) are arranged on the basis of the priority determined by the priority determining unit (140); and an available facility list outputting unit (199) to output the available facility list information.

## Description

### TECHNICAL FIELD

The present disclosure relates to a facility presentation device and a facility presentation method.

### BACKGROUND ART

There is technology of acquiring information indicating facilities such as accommodation facilities, restaurants, or shared offices that meet specified conditions (hereinafter referred to as "facility information") on the basis of the conditions and displaying the facility information that has been acquired on a terminal.

For example, in the field of reservation systems that accept reservations of a transportation means and an accommodation facility together, there is known a reservation system including: an available seat information storing means to store available seat information of a transportation means including at least information of a transportation fee; an available room information storing means to store available room information of an accommodation facility including at least information of an accommodation charge; a search condition receiving means to receive search conditions of the transportation means and the accommodation facility from a user terminal; an available seat information acquiring and transportation fee generating means to acquire a plurality of pieces of available seat information satisfying the search condition from the available seat information storing means and to generate information of transportation fee of the transportation means corresponding to the available seat information that has been acquired; an available room information acquiring and accommodation charge generating means to acquire a plurality of pieces of available room information satisfying the search condition from the available room information storing means and to generate information of accommodation charge of the accommodation facility corresponding to the available room information that has been acquired; and a selection page transmitting means to generate a selection page of the transportation means and the accommodation facility from the plurality of pieces of available seat information that has been acquired and the plurality of pieces of available room information that has been acquired, add, to the selection page that has been generated, to each of the accommodation facility, information of a total amount of charges calculated from the transportation fee of the transportation means and the accommodation charge of the accommodation facility selected one by one for each of an outward way and a return way under a preset condition from the plurality of pieces of available seat information that has been acquired, and to transmit the selection page to the user terminal (see, for example, Patent Literature 1 (claim 1)).

### CITATION LIST

### PATENT LITERATURE

Patent Literature 1: JP 2009-98904 A

### SUMMARY OF INVENTION

### TECHNICAL PROBLEM

There are cases where a business operator who presents facility information (hereinafter, simply referred to as a "business operator") wants a user to use a specific facility.

A reservation system disclosed in Patent Literature 1 (hereinafter referred to as "related art") allows a user to compare or consider transportation means or accommodation facilities. However, in the related art, there is a problem that it is not possible to guide a user to use a facility that a business operator wants the user to use as described above.

This disclosure is intended to solve the above-described problem, and an object thereof is to provide a facility presentation device that makes it possible to guide a user to use a facility that a business operator wants the user to use.

### SOLUTION TO PROBLEM

A facility presentation device of the present disclosure includes: a departure place acquiring unit to acquire departure place information indicating a departure place; an available facility acquiring unit to search for an available facility on the basis of the departure place information acquired by the departure place acquiring unit and to acquire available facility information for each facility indicating one or more available facilities obtained as a search result, the available facility information including facility name information indicating a name of a facility corresponding to the available facility information; a guidance basics acquiring unit to acquire guidance basic information regarding a facility that a business operator wants to guide to; a priority determining unit to determine a priority of the facility that the business operator wants to guide to on the basis of the guidance basic information acquired by the guidance basics acquiring unit; an available facility list acquiring unit to acquire available facility list information in which one or more pieces of available facility information acquired by the available facility acquiring unit are arranged on the basis of the priority determined by the priority determining unit; and an available facility list outputting unit to output the available facility list information acquired by the available facility list acquiring unit.

### ADVANTAGEOUS EFFECTS OF INVENTION

According to the present disclosure, it is possible to guide a user to use a facility that a business operator wants the user to use.

### BRIEF DESCRIPTION OF DRAWINGS

FIG. 1 is a block diagram illustrating an example of a configuration of the main part of a facility presentation system to which a facility presentation device according to a first embodiment is applied and the configuration of the main part of the facility presentation device.
FIG. 2 is an explanatory diagram illustrating an example of display output by a user terminal to a display unit included in the user terminal on the basis of available facility list information output by an available facility list outputting unit included in the facility presentation device according to the first embodiment.
FIGS. 3A and 3B are diagrams each illustrating an exemplary hardware configuration of the main part of the facility presentation device according to the first embodiment.
FIG. 4 is a flowchart illustrating an example of processes of the facility presentation device according to the first embodiment.

### DESCRIPTION OF EMBODIMENTS

Hereinafter, an embodiment of the present disclosure will be described in detail by referring to the drawings.

### First Embodiment

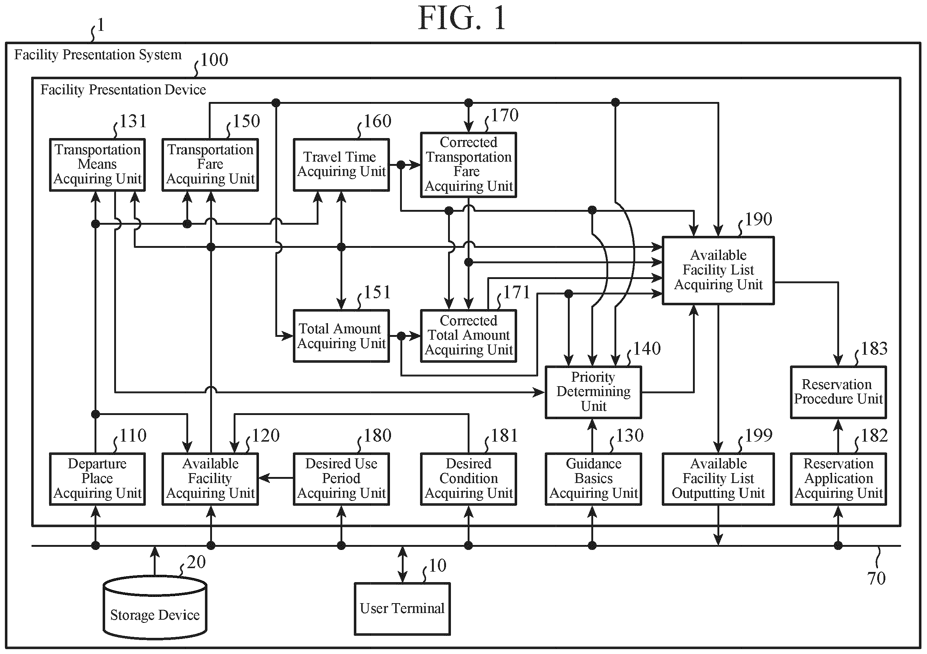

By referring to FIGS. 1 to 4, the facility presentation device 100 of a first embodiment will be described.

A configuration of the main part of a facility presentation system 1 to which a facility presentation device 100 according to the first embodiment is applied and a configuration of the main part of the facility presentation device 100 will be described with reference to FIG. 1.

FIG. 1 is a block diagram illustrating an example of a configuration of the main part of the facility presentation system 1 to which the facility presentation device 100 according to the first embodiment is applied and a configuration of the main part of the facility presentation device 100.

The facility presentation system 1 includes a user terminal 10, a storage device 20, and the facility presentation device 100.

The user terminal 10, the storage device 20, and the facility presentation device 100 included in the facility presentation system 1 are connected with each other via a network 70 capable of transmitting and receiving information.

Specifically, for example, the network 70 is a communication network such as the Internet. More specific examples of the network 70 include a wireless communication network such as a wireless local area network (LAN), long term evolution (LTE), or Bluetooth (registered trademark) (BT) or a wired communication network such as a wired LAN or a signal line that performs communication using a predetermined protocol.

The user terminal 10 is a portable terminal such as a smartphone or a tablet terminal or an information processing terminal such as a personal computer. The user terminal 10 includes an operation reception unit that receives operation input from a user who uses the user terminal 10 (hereinafter simply referred to as a "user") and a display unit that performs display output, and the user terminal 10 provides a user interface to the user by the operation reception unit and the display unit.

The facility presentation device 100 searches for a facility available to the user and acquires, for each facility, available facility information indicating one or more available facilities obtained as a search result. The facility presentation device 100 acquires available facility list information in which the available facility information corresponding to each facility acquired by the facility presentation device 100 is listed. The facility presentation device 100 outputs the available facility list information acquired by the facility presentation device 100 to the user terminal 10 via the network 70.

Note that the facility is an accommodation facility, a restaurant, a shared office, or the like.

Details of the facility presentation device 100 will be described later.

The storage device 20 is a storing means that stores information necessary for the facility presentation device 100 to search for available facilities, information necessary for the facility presentation device 100 to acquire available facility list information, and other information.

Components of the main part of the facility presentation device 100 will be described.

The facility presentation device 100 includes a departure place acquiring unit 110, an available facility acquiring unit 120, a guidance basics acquiring unit 130, a priority determining unit 140, an available facility list acquiring unit 190, and an available facility list outputting unit 199.

In addition to the above configuration, the facility presentation device 100 may also include a transportation means acquiring unit 131, a transportation fare acquiring unit 150, a total amount acquiring unit 151, a travel time acquiring unit 160, a corrected transportation fare acquiring unit 170, a corrected total amount acquiring unit 171, a desired use period acquiring unit 180, a desired condition acquiring unit 181, a reservation application acquiring unit 182, and a reservation procedure unit 183.

Hereinafter, the facility presentation device 100 will be described as including the departure place acquiring unit 110, the available facility acquiring unit 120, the guidance basics acquiring unit 130, the priority determining unit 140, the available facility list acquiring unit 190, the available facility list outputting unit 199, the transportation means acquiring unit 131, the transportation fare acquiring unit 150, the total amount acquiring unit 151, the travel time acquiring unit 160, the corrected transportation fare acquiring unit 170, the corrected total amount acquiring unit 171, the desired use period acquiring unit 180, the desired condition acquiring unit 181, the reservation application acquiring unit 182, and the reservation procedure unit 183.

The departure place acquiring unit 110 acquires departure place information indicating a departure place.

Specifically, for example, the departure place acquiring unit 110 acquires the departure place information from the user terminal 10 via the network 70.

In a case where the user terminal 10 acquires current location information indicating the current location of the user terminal 10 by a global navigation satellite system (GNSS) such as the global positioning system (GPS) or the quasi-zenith satellite system (QZSS), an internet protocol (IP) address, or the like, for example, the user terminal 10 outputs the current location information acquired by the user terminal 10. The departure place acquiring unit 110 acquires the current location information output by the user terminal 10 as the departure place information.

The user terminal 10 may acquire departure place information indicating the departure place with the user performing operation input for designating the departure place via the operation reception unit and output the acquired departure place information. In this case, the departure place acquiring unit 110 acquires the departure place information output by the user terminal 10.

The available facility acquiring unit 120 searches for available facilities on the basis of the departure place information acquired by the departure place acquiring unit 110. The available facility acquiring unit 120 acquires available facility information for each facility indicating one or more available facilities obtained as a search result. Specifically, the available facility acquiring unit 120 acquires the available facility information including facility name information indicating the name of the facility corresponding to the available facility information.

That is, the available facility information acquired by the available facility acquiring unit 120 includes at least the facility name information indicating the name of the facility corresponding to the available facility information.

Each of one or more pieces of available facility information acquired by the available facility acquiring unit 120 may include, in addition to the facility name information, location information indicating the location of a facility corresponding to the available facility information.

In addition, each of the one or more pieces of available facility information acquired by the available facility acquiring unit 120 may include, in addition to the facility name information, facility charge information indicating the charge of the facility corresponding to the available facility information (hereinafter, the "facility charge" is also simply referred to as the "charge".).

Hereinafter, each of the one or more pieces of available facility information acquired by the available facility acquiring unit 120 will be described as including, in addition to the facility name information, the location information indicating the location of the facility corresponding to the available facility information and the charge information indicating the charge of the facility corresponding to the available facility information.

For example, the available facility acquiring unit 120 performs the search on the premise that a facility around the departure place indicated by the departure place information as an available facility on the basis of the departure place information acquired by the departure place acquiring unit 110.

Note that the facility around the departure place is, for example, a facility located in an area determined on the basis of the departure place, such as a facility located in an area within a distance of 10 kilometers (km) from the departure place. The facilities around the departure place are not limited to facilities located in the area determined on the basis of the departure place. For example, a facility around the departure place may be a facility that can be arrived at within a predetermined time period from the departure place, such as a facility that can be arrived at within 30 minutes from the departure place in a case where a public transportation means such as a railway or a fixed-route bus is used.

More specifically, for example, the available facility acquiring unit 120 acquires a facility database by reading the facility database stored in advance in the storage device 20 from the storage device 20. In the facility database, facility information indicating a facility is registered for each facility. The facility information includes facility name information indicating the name of the facility, location information indicating the location of the facility, charge information indicating the charge of the facility, and others. The available facility acquiring unit 120 includes a database engine for searching the facility database, and the available facility acquiring unit 120, by searching the facility database using the database engine included in the available facility acquiring unit 120, acquires facility information indicating each of one or more available facilities obtained as a search result by the database engine from the facility database as available facility information.

The guidance basics acquiring unit 130 acquires guidance basic information regarding a facility that a business operator who operates the facility presentation device 100 (hereinafter, simply referred to as "business operator") wants to guide to.

Note that the guidance basic information includes facility congestion information indicating a congestion status for each facility indicated by the available facility information registered in the facility database, surrounding congestion information indicating a congestion status in the surroundings of each of the facilities, event information indicating an event that is held in the surroundings of each of the facilities and that the business operator wants to guide to, shop information indicating a shop that is in the surroundings of each of the facilities and that the business operator wants to guide to, transportation means congestion information indicating a congestion status of public transportation means such as railway or fixed-route buses, or others.

The priority determining unit 140 determines the priority of the facility that the business operator wants to guide to on the basis of the guidance basic information acquired by the guidance basics acquiring unit 130.

The priority determining unit 140 may determine the priority of each of the facilities indicated by the facility information registered in the facility database or may determine the priority of each of the facilities indicated by the one or more pieces of available facility information acquired by the available facility acquiring unit 120.

For example, in a case where the guidance basic information is the facility congestion information, the priority determining unit 140 determines the priority of the facility that the business operator wants to guide to so that the priority of a facility that is not congested becomes higher than the priority of a facility that is congested on the basis of the congestion status of each facility indicated by the facility congestion information.

In addition, for example, in a case where the guidance basic information is the surrounding congestion information, the priority determining unit 140 determines the priority of the facility that the business operator wants to guide to so that the priority of the facility the surroundings of which are not congested becomes higher than the priority of a facility the surrounding of which are congested, on the basis of the congestion status in the surroundings of each facility indicated by the surrounding congestion information.

In addition, for example, in a case where the guidance basic information is event information, the priority determining unit 140 determines, on the basis of the event information, the priority of the facility that the business operator wants to guide to so that the priority of a facility in which an event the business operator wants to guide to is held in the surroundings thereof becomes relatively higher than the priority of other facilities.

In addition, for example, in a case where the guidance basic information is shop information, the priority determining unit 140 determines, on the basis of the shop information, the priority of the facility that the business operator wants to guide to so that the priority of the facility that has a shop that the business operator wants to guide to in the surroundings thereof becomes relatively higher than the priority of other facilities.

A specific example in which the priority determining unit 140 determines the priority in a case where the guidance basic information is transportation means congestion information will be described later.

The available facility list acquiring unit 190 acquires available facility list information in which one or more pieces of available facility information acquired by the available facility acquiring unit 120 are arranged on the basis of the priority determined by the priority determining unit 140.

Specifically, for example, the available facility list acquiring unit 190 acquires the available facility list information by generating the available facility list information so that the one or more pieces of available facility information acquired by the available facility acquiring unit 120 are displayed on the display unit included in the user terminal 10 at high ranks in descending order of the priority of the facility on the basis of the priorities.

The available facility list outputting unit 199 outputs the available facility list information acquired by the available facility list acquiring unit 190.

Specifically, for example, the available facility list outputting unit 199 outputs the available facility list information to the user terminal 10 via the network 70.

The user terminal 10 acquires the available facility list information output by the available facility list outputting unit 199 via the network 70 and performs display output based on the acquired available facility list information on the display unit.

The user determines a facility to use on the basis of the display output based on the available facility list information in the user terminal 10.

With the above configuration, the facility presentation device 100 can cause the display unit included in the user terminal 10 to display the available facility information indicating the facility that the business operator wants to guide to at a high rank. Therefore, the facility presentation device 100 can increase the probability that the user uses the facility that the business operator wants the user to use. As a result, the facility presentation device 100 can guide the user to use the facility that the business operator wants the user to use.

A specific example in which the priority determining unit 140 determines the priority in a case where the guidance basic information is the transportation means congestion information will be explained.

In a case where the guidance basic information is transportation means congestion information, for example, the facility presentation device 100 includes the transportation means acquiring unit 131.

The transportation means acquiring unit 131 acquires, for each facility corresponding to the one or more pieces of available facility information acquired by the available facility acquiring unit 120, the transportation means information indicating a transportation means for traveling from the departure place indicated by the departure place information to a location indicated by the location information on the basis of the departure place information acquired by the departure place acquiring unit 110 and the location information included in the available facility information.

The transportation means acquiring unit 131 may acquire the transportation means information on the basis of the departure place information and the location information included in the facility information for each facility indicated by one of the pieces of facility information registered in the facility database.

In a case where the guidance basic information is the transportation means congestion information, the priority determining unit 140 determines the priority of the facility that the business operator wants to guide to on the basis of the transportation means information acquired by the transportation means acquiring unit 131 in addition to the transportation means congestion information that is the guidance basic information acquired by the guidance basics acquiring unit 130.

Specifically, for example, on the basis of the transportation means congestion information and the transportation means information, the priority determining unit 140 determines the priority of the facility that the business operator wants to guide to so that the priority of the facility to which a transportation means is not congested is higher than the priority of a facility to which the transportation means is congested when traveling from the departure place indicated by the departure place information to the location indicated by the location information.

As described above, the facility presentation device 100 may include the transportation fare acquiring unit 150.

The transportation fare acquiring unit 150 acquires, for each facility corresponding to the one or more pieces of available facility information acquired by the available facility acquiring unit 120, transportation fare information indicating a transportation fare required for traveling from the departure place indicated by the departure place information to a location indicated by the location information on the basis of the departure place information acquired by the departure place acquiring unit 110 and the location information included in the available facility information.

Note that the transportation fare indicated by the transportation fare information is, for example, a fare required when traveling from the departure place to the location using a public transportation means such as a railway or a fixed-route bus.

For each facility indicated by each piece of facility information registered in the facility database, the transportation fare acquiring unit 150 may acquire the transportation fare information indicating the transportation fare required for traveling from the departure place indicated by the departure place information to the location indicated by the location information on the basis of the departure place information and the location information included in the facility information.

In a case where the facility presentation device 100 includes the transportation fare acquiring unit 150, for example, the priority determining unit 140 may determine the priority of the facility which the business operator wants to guide to on the basis of the transportation fare information acquired by the transportation fare acquiring unit 150 in addition to the guidance basic information acquired by the guidance basics acquiring unit 130.

Specifically, for example, the priority determining unit 140 first determines, on the basis of the transportation fare information, the priority of the facility that the business operator wants to guide to so that the priority of the facility having a low price is higher than the priority of a facility having a high price as the transportation fare indicated by the transportation fare information. Next, in a case where there is a plurality of facilities having the same amount of transportation fares, for example, for a plurality of facilities having the same amount of transportation fares, the priority determining unit 140 determines the priority of the facility that the business operator wants to guide to on the basis of the guidance basic information.

In addition, the priority determining unit 140 may first determine the priority of the facility that the business operator wants to guide to on the basis of the guidance basic information and, in a case where there is a plurality of facilities of which priorities are equivalent to each other or of which a difference between the priorities is within a predetermined range, for the plurality of facilities, may then determine the priority of a facility that the business operator wants to guide to so that the priority of the facility having a low transportation fare as compared to the priority of a facility having a high transportation fare indicated by the transportation fare information.

With the above configuration, the facility presentation device 100 can cause the display unit included in the user terminal 10 to display the available facility information indicating the facility that the business operator wants to guide to at a high rank with consideration to the transportation fare required for traveling from the departure place to the location. Therefore, the facility presentation device 100 can increase the probability that the user uses the facility that the business operator wants the user to use. As a result, the facility presentation device 100 can guide the user to use the facility that the business operator wants the user to use.

In a case where the facility presentation device 100 includes the transportation fare acquiring unit 150, for example, the available facility list acquiring unit 190 may acquire available facility list information in which the transportation fare information acquired by the transportation fare acquiring unit 150 is arranged in association with the available facility information when acquiring the available facility list information.

With the above configuration, the facility presentation device 100 can cause the display unit included in the user terminal 10 to display the available facility information indicating the facility that the business operator wants to guide to at a high rank with consideration to the transportation fare required for traveling from the departure place to the location. Furthermore, the facility presentation device 100 can cause the display unit included in the user terminal 10 to display the transportation fare information in association with the available facility information. Therefore, the facility presentation device 100 can increase the probability that the user uses the facility that the business operator wants the user to use while allowing the user to compare the transportation fare required for traveling to the facility. As a result, the facility presentation device 100 can guide the user to use the facility that the business operator wants the user to use.

As described above, the facility presentation device 100 may include the transportation fare acquiring unit 150 and the total amount acquiring unit 151.

Since the transportation fare acquiring unit 150 has been described above, the description thereof will be omitted.

The total amount acquiring unit 151 calculates the total amount of the transportation fare indicated by the transportation fare information acquired by the transportation fare acquiring unit 150 and the charge indicated by the charge information included in the available facility information and acquires total amount information indicating the calculated total amount.

In a case where the transportation fare acquiring unit 150 acquires the transportation fare information indicating the transportation fare required for traveling from the departure place indicated by the departure place information to the location indicated by the location information for each facility indicated by each piece of the facility information registered in the facility database, the total amount acquiring unit 151 may calculate the total amount of the transportation fare indicated by the transportation fare information acquired by the transportation fare acquiring unit 150 and the charge indicated by the charge information included in the facility information for each facility indicated by each piece of the facility information registered in the facility database and acquire the total amount information indicating the calculated total amount.

In a case where the facility presentation device 100 includes the transportation fare acquiring unit 150 and the total amount acquiring unit 151, for example, the priority determining unit 140 may determine the priority of the facility that the business operator wants to guide to on the basis of the total amount information acquired by the total amount acquiring unit 151 in addition to the guidance basic information acquired by the guidance basics acquiring unit 130.

Specifically, for example, the priority determining unit 140 first determines, on the basis of the total amount information, the priority of the facility that the business operator wants to guide to so that the priority of a facility of which total amount is low is higher as compared to the priority of a facility having a high total amount indicated by the total amount information. Next, in a case where there is a plurality of facilities having the same total amount, for example for a plurality of facilities having the same total amount, the priority determining unit 140 determines the priority of the facility that the business operator wants to guide to on the basis of the guidance basic information.

In addition, the priority determining unit 140 may first determine the priority of the facility that the business operator wants to guide to on the basis of the guidance basic information and, in a case where there is a plurality of facilities of which priorities are equivalent to each other or of which a difference between the priorities is within a predetermined range, for the plurality of facilities, may then determine the priority of a facility that the business operator wants to guide to so that the priority of the facility having a low total amount becomes higher as compared to the priority of a facility having a high total amount indicated by the total amount information.

With the above configuration, the facility presentation device 100 can cause the display unit included in the user terminal 10 to display the available facility information indicating the facility that the business operator wants to guide to at a high rank with consideration to the total amount indicated by the total amount information. Therefore, the facility presentation device 100 can increase the probability that the user uses the facility that the business operator wants the user to use. As a result, the facility presentation device 100 can guide the user to use the facility that the business operator wants the user to use.

In a case where the facility presentation device 100 includes the transportation fare acquiring unit 150 and the total amount acquiring unit 151, for example, the available facility list acquiring unit 190 may acquire available facility list information in which the total amount information acquired by the total amount acquiring unit 151 is arranged in association with the available facility information when acquiring the available facility list information.

With the above configuration, the facility presentation device 100 can cause the display unit included in the user terminal 10 to display the available facility information indicating the facility that the business operator wants to guide to at a high rank with consideration to the total amount indicated by the total amount information. Furthermore, the facility presentation device 100 can cause the display unit included in the user terminal 10 to display the total amount information in association with the available facility information. Therefore, the facility presentation device 100 can increase the probability that the user uses the facility that the business operator wants the user to use while allowing the user to compare the total amount required for using the facility. As a result, the facility presentation device 100 can guide the user to use the facility that the business operator wants the user to use.

As described above, the facility presentation device 100 may include the travel time acquiring unit 160.

The travel time acquiring unit 160 acquires, for each facility corresponding to the one or more pieces of available facility information acquired by the available facility acquiring unit 120, travel time information indicating a travel time required for traveling from the departure place indicated by the departure place information to a location indicated by the location information on the basis of the departure place information acquired by the departure place acquiring unit 110 and the location information included in the available facility information.

Note that the travel time indicated by the travel time information is, for example, a period required from departure from the departure place to arrival at the location using a public transportation means such as a railway or a fixed-route bus.

For each facility indicated by each piece of facility information registered in the facility database, the travel time acquiring unit 160 may acquire travel time information indicating the travel time required for traveling from the departure place indicated by the departure place information to the location indicated by the location information on the basis of the departure place information and the location information included in the facility information.

In a case where the facility presentation device 100 includes the travel time acquiring unit 160, for example, the priority determining unit 140 may determine the priority of the facility which the business operator wants to guide to on the basis of the travel time information acquired by the travel time acquiring unit 160 in addition to the guidance basic information acquired by the guidance basics acquiring unit 130.

Specifically, for example, the priority determining unit 140 first determines, on the basis of the travel time information, the priority of the facility that the business operator wants to guide to so that the priority of the facility having a short travel time is higher than the priority of a facility having a long travel time indicated by the travel time information. Next, in a case where there is a plurality of facilities having equivalent travel times, for example for a plurality of facilities having equivalent travel times, the priority determining unit 140 determines the priority of the facility that the business operator wants to guide to on the basis of the guidance basic information.

In addition, the priority determining unit 140 may first determine the priority of the facility that the business operator wants to guide to on the basis of the guidance basic information, and next determine the priority of the facility that the business operator wants to guide to so that the priority of the facility with a short travel time indicated by the travel time information is higher than the priority of the facility with a long travel time indicated by the travel time information in a case where there is a plurality of facilities with equivalent priorities or a plurality of facilities with a difference between the priorities within a predetermined range.

With the above configuration, the facility presentation device 100 can cause the display unit included in the user terminal 10 to display the available facility information indicating the facility that the business operator wants to guide to at a high rank with consideration to the travel time required for traveling from the departure place to the location. Therefore, the facility presentation device 100 can increase the probability that the user uses the facility that the business operator wants the user to use. As a result, the facility presentation device 100 can guide the user to use the facility that the business operator wants the user to use.

In a case where the facility presentation device 100 includes the travel time acquiring unit 160, for example, the available facility list acquiring unit 190 may acquire available facility list information in which the travel time information acquired by the travel time acquiring unit 160 is arranged in association with the available facility information when acquiring the available facility list information.

With the above configuration, the facility presentation device 100 can cause the display unit included in the user terminal 10 to display the available facility information indicating the facility that the business operator wants to guide to at a high rank with consideration to the travel time required for traveling from the departure place to the location. Furthermore, the facility presentation device 100 can cause the display unit included in the user terminal 10 to display the travel time information in association with the available facility information. Therefore, the facility presentation device 100 can increase the probability that the user uses the facility that the business operator wants the user to use while allowing the user to compare the travel time required for traveling to the facility. As a result, the facility presentation device 100 can guide the user to use the facility that the business operator wants the user to use.

As described above, the facility presentation device 100 may include the transportation fare acquiring unit 150 and the corrected transportation fare acquiring unit 170.

Since the transportation fare acquiring unit 150 has been described above, the description thereof will be omitted.

The corrected transportation fare acquiring unit 170 corrects the transportation fare indicated by the transportation fare information acquired by the transportation fare acquiring unit 150 on the basis of the priority determined by the priority determining unit 140 and acquires corrected transportation fare information indicating the corrected transportation fare that is a transportation fare after correction.

Specifically, for example, in a case where the priority of the facility that the business operator wants the user to use is lower than the priority of other facilities in the priorities determined by the priority determining unit 140, the corrected transportation fare acquiring unit 170 corrects the transportation fare so that the transportation fare indicated by the transportation fare information corresponding to the facility that the business operator wants the user to use is reduced and acquires the corrected transportation fare information indicating the corrected transportation fare that is the transportation fare after correction.

In a case where the facility presentation device 100 includes the corrected transportation fare acquiring unit 170, for example, the available facility list acquiring unit 190 acquires available facility list information in which the corrected transportation fare information acquired by the corrected transportation fare acquiring unit 170 is arranged in association with the available facility information when acquiring the available facility list information.

With the above configuration, the price competitiveness of the facility that the business operator wants the user to use increases as compared to other facilities having a higher priority than the priority of the facility.

Furthermore, with the above configuration, the facility presentation device 100 can cause the display unit included in the user terminal 10 to display the available facility information indicating the facility that the business operator wants to guide to at a high rank with consideration to the corrected transportation fare required for traveling from the departure place to the location. Furthermore, the facility presentation device 100 can cause the display unit included in the user terminal 10 to display the corrected transportation fare information in association with the available facility information. Therefore, the facility presentation device 100 can increase the probability that the user uses the facility that the business operator wants the user to use while allowing the user to compare the corrected transportation fare required for traveling to the facility. As a result, the facility presentation device 100 can guide the user to use the facility that the business operator wants the user to use.

In a case where the facility presentation device 100 includes the corrected transportation fare acquiring unit 170, for example, the priority determining unit 140 may re-determine the priorities that have been already determined by the priority determining unit 140 on the basis of the guidance basic information acquired by the guidance basics acquiring unit 130 and the corrected transportation fare information acquired by the corrected transportation fare acquiring unit 170 after the corrected transportation fare acquiring unit 170 acquires the corrected transportation fare information.

The method by which the priority determining unit 140 re-determines the priorities on the basis of the guidance basic information acquired by the guidance basics acquiring unit 130 and the corrected transportation fare information acquired by the corrected transportation fare acquiring unit 170 is only required to be a similar method to the method by which the priority determining unit 140 determines the priorities on the basis of the guidance basic information and the transportation fare information acquired by the transportation fare acquiring unit 150, and thus detailed description thereof will be omitted.

In a case where the priority determining unit 140 re-determines the priorities on the basis of the guidance basic information and the corrected transportation fare information, for example, the available facility list acquiring unit 190 acquires available facility list information in which one or more pieces of available facility information acquired by the available facility acquiring unit 120 are arranged on the basis of the priorities re-determined by the priority determining unit 140.

With the above configuration, the facility presentation device 100 can cause the display unit included in the user terminal 10 to display the available facility information indicating the facility that the business operator wants to guide to at a high rank with consideration to the corrected transportation fare obtained by correcting the travel fare required for traveling from the departure place to the location. Therefore, the facility presentation device 100 can increase the probability that the user uses the facility that the business operator wants the user to use while allowing the user to compare the corrected transportation fare required for traveling to the facility. As a result, the facility presentation device 100 can guide the user to use the facility that the business operator wants the user to use.

The information used when the corrected transportation fare acquiring unit 170 corrects the transportation fare is not limited to the priorities determined by the priority determining unit 140.

Specifically, for example in a case where the facility presentation device 100 includes the transportation fare acquiring unit 150, the travel time acquiring unit 160, and the corrected transportation fare acquiring unit 170, the corrected transportation fare acquiring unit 170 may correct the transportation fare indicated by the transportation fare information acquired by the transportation fare acquiring unit 150 on the basis of the priority determined by the priority determining unit 140 and the travel time information acquired by the travel time acquiring unit 160 and acquire corrected transportation fare information indicating the corrected transportation fare which is the transportation fare after correction.

Since the transportation fare acquiring unit 150 and the travel time acquiring unit 160 have been described above, the description thereof will be omitted.

For example, in a case where the user compares two facilities having equivalent transportation fares, the user may determine to use a facility with which the travel time required for traveling from the departure place to arrival at the facility is short among the two facilities. In a case where the facility that the business operator wants the user to use is a facility having a longer travel time among the two facilities having the same transportation fare, there is a case where it is difficult to guide the user to use the facility.

For example, on the basis of the priority determined by the priority determining unit 140 and the travel time information acquired by the travel time acquiring unit 160, the corrected transportation fare acquiring unit 170 converts the travel time indicated by the travel time information into an amount of money by a predetermined calculation method such as converting 10 minutes into 100 yen for the facility that the business operator wants the user to use among two facilities having the same transportation fare. Furthermore, the corrected transportation fare acquiring unit 170 subtracts the amount of money from the transportation fare indicated by the transportation fare information acquired by the transportation fare acquiring unit 150, thereby corrects the transportation fare, and acquires corrected transportation fare information indicating the corrected transportation fare which is the transportation fare after correction.

With the above configuration, the price competitiveness of the facility that the business operator wants the user to use increases as compared to other facilities in which the travel time required for traveling to the other facilities is short as compared to traveling to the facility that the business operator wants the user to use.

Furthermore, with the above configuration, the facility presentation device 100 can cause the display unit included in the user terminal 10 to display the available facility information indicating the facility that the business operator wants to guide to at a high rank with consideration to the corrected transportation fare required for traveling from the departure place to the location. Furthermore, the facility presentation device 100 can cause the display unit included in the user terminal 10 to display the corrected transportation fare information in association with the available facility information. Therefore, the facility presentation device 100 can increase the probability that the user uses the facility that the business operator wants the user to use while allowing the user to compare the corrected transportation fare required for traveling to the facility. As a result, the facility presentation device 100 can guide the user to use the facility that the business operator wants the user to use.

As described above, the facility presentation device 100 may include the transportation fare acquiring unit 150, the corrected transportation fare acquiring unit 170, and the corrected total amount acquiring unit 171.

The transportation fare acquiring unit 150 and the corrected transportation fare acquiring unit 170 have been described above, and thus description thereof is omitted.

Note that, in a case where the facility presentation device 100 includes the transportation fare acquiring unit 150, the travel time acquiring unit 160, the corrected transportation fare acquiring unit 170, and the corrected total amount acquiring unit 171 as described above, the corrected transportation fare acquiring unit 170 may correct the transportation fare indicated by the transportation fare information acquired by the transportation fare acquiring unit 150 on the basis of the priority determined by the priority determining unit 140 and the travel time information acquired by the travel time acquiring unit 160 and acquire the corrected transportation fare information indicating the corrected transportation fare which is the transportation fare after correction.

The corrected total amount acquiring unit 171 calculates the corrected total amount that is the total amount of the corrected transportation fare indicated by the corrected transportation fare information acquired by the corrected transportation fare acquiring unit 170 and the charge indicated by the charge information included in the available facility information and acquires the corrected total amount information indicating the corrected total amount that has been calculated.

In a case where the facility presentation device 100 includes the corrected total amount acquiring unit 171, for example when acquiring the available facility list information, the available facility list acquiring unit 190 acquires the available facility list information in which the corrected total amount information acquired by the corrected total amount acquiring unit 171 is arranged in association with the available facility information.

With the above configuration, the price competitiveness of the facility that the business operator wants the user to use increases as compared to other facilities having a higher priority than the priority of the facility.

Furthermore, with the above configuration, the facility presentation device 100 can cause the display unit included in the user terminal 10 to display the available facility information indicating the facility that the business operator wants to guide to at a high rank with consideration to the corrected total amount required for using the facility. Furthermore, the facility presentation device 100 can cause the display unit included in the user terminal 10 to display the corrected total amount information in association with the available facility information. Therefore, the facility presentation device 100 can increase the probability that the user uses the facility that the business operator wants the user to use while allowing the user to compare the corrected total amount required for using the facility. As a result, the facility presentation device 100 can guide the user to use the facility that the business operator wants the user to use.

In a case where the facility presentation device 100 includes the corrected total amount acquiring unit 171, for example, the priority determining unit 140 may re-determine the priorities that have already been determined by the priority determining unit 140 on the basis of the guidance basic information acquired by the guidance basics acquiring unit 130 and the corrected total amount information acquired by the corrected total amount acquiring unit 171 after the corrected total amount acquiring unit 171 acquires the corrected total amount information.

The method by which priority determining unit 140 re-determines the priorities on the basis of the guidance basic information acquired by guidance basics acquiring unit 130 and the corrected total amount information acquired by the corrected total amount acquiring unit 171 is only required to be a similar method to the method by which priority determining unit 140 determines the priorities on the basis of the guidance basic information and the total amount information acquired by the total amount acquiring unit 151, and thus detailed description thereof will be omitted.

In a case where the priority determining unit 140 re-determines the priorities on the basis of the guidance basic information and the corrected total amount information, for example, the available facility list acquiring unit 190 acquires the available facility list information in which one or more pieces of available facility information acquired by the available facility acquiring unit 120 are arranged on the basis of the priorities re-determined by the priority determining unit 140.

With the above configuration, the facility presentation device 100 can display the available facility information indicating the facility that the business operator wants to guide to at a high rank on the display unit included in the user terminal 10 with consideration to the corrected total amount obtained by adding the corrected transportation fare obtained by correcting the transportation fare required for traveling from the departure place to the location and the charge of the facility. Therefore, the facility presentation device 100 can increase the probability that the user uses the facility that the business operator wants the user to use while allowing the user to compare the corrected total amount required for using the facility. As a result, the facility presentation device 100 can guide the user to use the facility that the business operator wants the user to use.

Note that the method by which the corrected total amount acquiring unit 171 calculates the corrected total amount indicated by the corrected total amount information is not limited to the method of calculating the corrected total amount on the basis of the total amount of the corrected transportation fare indicated by the corrected transportation fare information acquired by the corrected transportation fare acquiring unit 170 and the charge indicated by the charge information included in the available facility information.

Specifically, for example, in a case where the facility presentation device 100 includes the transportation fare acquiring unit 150, the total amount acquiring unit 151, and the corrected total amount acquiring unit 171, the corrected total amount acquiring unit 171 may correct the total amount indicated by the total amount information acquired by the total amount acquiring unit 151 on the basis of the priority determined by the priority determining unit 140 and acquire the corrected total amount information indicating the corrected total amount which is the total amount after correction.

More specifically, for example, in this case, in a case where the priority of the facility that the business operator wants the user to use is lower as compared to the priorities of other facilities in the priorities determined by the priority determining unit 140, the corrected total amount acquiring unit 171 corrects the total amount so that the total amount indicated by the total amount information corresponding to the facility that the business operator wants the user to use becomes low and acquires the corrected total amount information indicating the corrected total amount which is the total amount after correction.

Moreover, in a case where the facility presentation device 100 includes the transportation fare acquiring unit 150, the total amount acquiring unit 151, the travel time acquiring unit 160, and the corrected total amount acquiring unit 171, the corrected total amount acquiring unit 171 may correct the total amount indicated by the total amount information acquired by the total amount acquiring unit 151 on the basis of the priority determined by the priority determining unit 140 and the travel time information acquired by the travel time acquiring unit 160 and acquire the corrected total amount information indicating the corrected total amount which is the total amount after correction.

Specifically, for example, the corrected total amount acquiring unit 171 converts the travel time indicated by the travel time information into an amount of money by a predetermined calculation method such as converting 10 minutes into 100 yen on the basis of the priority determined by the priority determining unit 140 and the travel time information acquired by the travel time acquiring unit 160 for the facility that the business operator wants the user to use among the two facilities having the same total amount. Furthermore, the corrected total amount acquiring unit 171 corrects the total amount by subtracting the amount of money from the total amount indicated by the total amount information acquired by the total amount acquiring unit 151 and acquires the corrected total amount information indicating the corrected total amount which is the total amount after correction.

With the above configuration, the price competitiveness of the facility that the business operator wants the user to use increases as compared to other facilities in which the travel time required for traveling to the other facilities is short as compared to traveling to the facility that the business operator wants the user to use.

Furthermore, with the above configuration, the facility presentation device 100 can cause the display unit included in the user terminal 10 to display the available facility information indicating the facility that the business operator wants to guide to at a high rank with consideration to the corrected total amount required for using the facility. Furthermore, the facility presentation device 100 can cause the display unit included in the user terminal 10 to display the corrected total amount information in association with the available facility information. Therefore, the facility presentation device 100 can increase the probability that the user uses the facility that the business operator wants the user to use while allowing the user to compare the corrected total amount required for using the facility. As a result, the facility presentation device 100 can guide the user to use the facility that the business operator wants the user to use.

As described above, the facility presentation device 100 may include the desired use period acquiring unit 180.

The desired use period acquiring unit 180 acquires desired use period information indicating the desired use period of a facility.

Specifically, for example, the desired use period acquiring unit 180 acquires the desired use period information from the user terminal 10 via the network 70. The user terminal 10 acquires the desired use period information indicating the desired use period with the user performing operation input for designating the desired use period of the facility via the operation reception unit and outputs the acquired desired use period information.

In a case where the facility presentation device 100 includes the desired use period acquiring unit 180, the available facility acquiring unit 120 searches for an available facility on the basis of the desired use period information acquired by the desired use period acquiring unit 180 in addition to the departure place information.

In addition, in a case where the facility presentation device 100 includes the desired use period acquiring unit 180, the guidance basics acquiring unit 130 acquires the guidance basic information corresponding to the desired use period of the facility indicated by the desired use period information acquired by the desired use period acquiring unit 180.

The guidance basic information corresponding to the desired use period is, for example, the facility congestion information indicating a congestion status estimated in the desired use period for each of the facilities indicated by the available facility information registered in the facility database. Moreover, for example, the guidance basic information is the event information indicating an event that is held in the desired use period in the surroundings of each of the facilities and that the business operator wants to guide to. Furthermore, for example, the guidance basic information is the transportation means congestion information indicating a congestion status estimated in periods before and after the desired use period of a public transportation means such as a railway or a fixed-route bus.

With the above configuration, the facility presentation device 100 can guide the user to use the facility that the business operator wants the user to use in the desired use period.

As described above, the facility presentation device 100 may include the desired condition acquiring unit 181.

The desired condition acquiring unit 181 acquires desired condition information indicating desired equipment installed in the facility or desired service provided in the facility.

Specifically, for example, the desired condition acquiring unit 181 acquires the desired condition information from the user terminal 10 via the network 70. The user terminal 10 acquires the desired condition information indicating the desired condition with the user performing operation input for designating the desired condition of the facility via the operation reception unit and outputs the acquired desired condition information.

In a case where the facility presentation device 100 includes the desired condition acquiring unit 181, the available facility acquiring unit 120 searches for an available facility on the basis of the desired condition information acquired by the desired condition acquiring unit 181 in addition to the departure place information.

With the above configuration, the facility presentation device 100 can guide the user to use the facility that the business operator wants the user to use from among facilities having the desired equipment or facilities in which the desired service is provided.

Note that the facility presentation device 100 may include the desired use period acquiring unit 180 and the desired condition acquiring unit 181. In a case where the facility presentation device 100 includes the desired use period acquiring unit 180 and the desired condition acquiring unit 181, for example, the available facility acquiring unit 120 searches for an available facility on the basis of the departure place information, the desired use period information, and the desired condition information.

As described above, the facility presentation device 100 may include the reservation application acquiring unit 182 and the reservation procedure unit 183.

The reservation application acquiring unit 182 acquires reservation application information indicating a reservation application for using a facility corresponding to available facility information selected from among the one or more pieces of available facility information acquired by the available facility acquiring unit 120.

Specifically, for example, the reservation application acquiring unit 182 acquires the reservation application information from the user terminal 10 via the network 70. The user terminal 10 acquires the reservation application information indicating the reservation application with the user performing operation input for designating the reservation application of the facility via the operation reception unit and outputs the acquired reservation application information.

The reservation procedure unit 183 performs a reservation procedure process for using the facility on the basis of the reservation application information acquired by reservation application acquiring unit 182.

Specifically, for example, the reservation procedure unit 183 performs a reservation process of the facility and a payment process of the charge required for using the facility on the basis of the reservation application information. In addition to the payment process of the charge required for using the facility, the reservation procedure unit 183 may perform a payment process of the transportation fare required for traveling from the departure place to the facility.

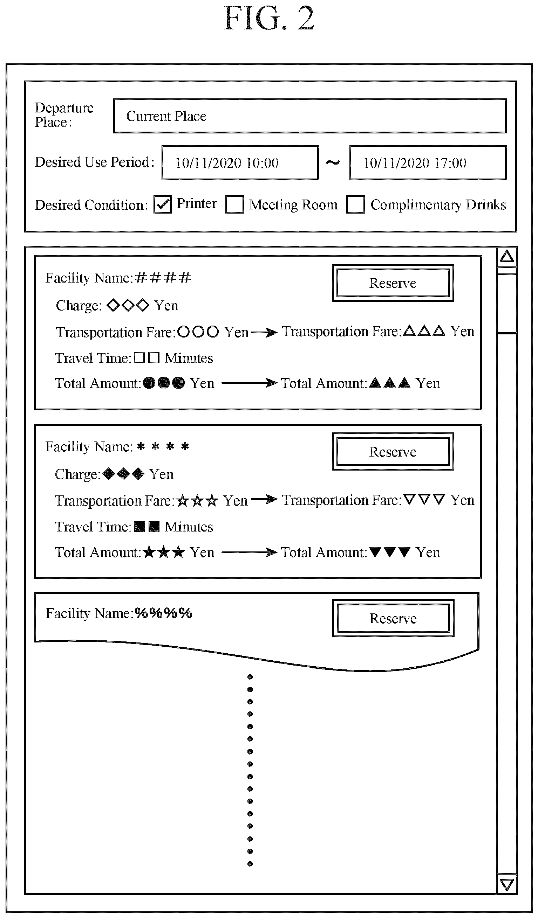

With reference to FIG. 2, the display that the user terminal 10 outputs to the display unit on the basis of the available facility list information output by the available facility list outputting unit 199 included in the facility presentation device 100 according to the first embodiment will be described.

FIG. 2 is an explanatory diagram illustrating an example of display output by the user terminal 10 to the display unit included in the user terminal 10 on the basis of the available facility list information output by the available facility list outputting unit 199 included in the facility presentation device 100 according to the first embodiment.

As illustrated in FIG. 2, the display that is output to the display unit of the user terminal 10 includes a search condition designating area in which the user designates a search condition of facilities and an available facility displaying area in which available facility list information in which the one or more pieces of available facility information acquired from the facility presentation device 100 are arranged is displayed.

In the search condition designating area, for example as illustrated in FIG. 2, information indicating the departure place, information indicating a desired use period, and information indicating a desired use condition are displayed.

In the available facility displaying area, for example as illustrated in FIG. 2, each of the transportation fare information, the travel time information, and the total amount information corresponding to each of the one or more pieces of available facility information is displayed in association with corresponding available facility information.

For example, in a case where the corrected transportation fare information is included in the available facility list information, the corrected transportation fare information corresponding to each of the one or more pieces of available facility information is displayed in the available facility displaying area in association with corresponding available facility information.

Furthermore, for example in a case where the available facility list information includes the corrected total amount information, the corrected total amount information corresponding to each of the one or more pieces of available facility information is displayed in the available facility displaying area in association with corresponding available facility information.

The display illustrated in FIG. 2 is merely an example, and the display that is output by the user terminal 10 to the display unit included in the user terminal 10 is not limited to the display illustrated in FIG. 2.

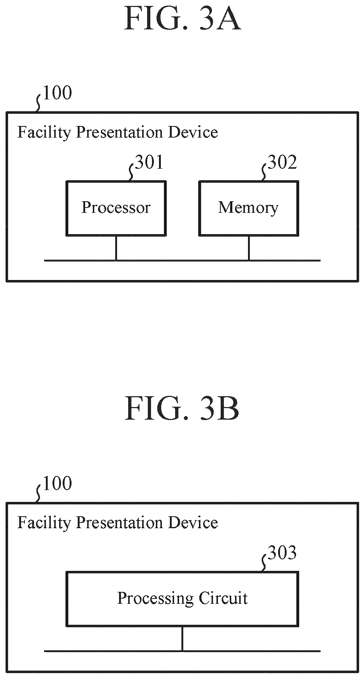

By referring to FIGS. 3A and 3B, the hardware configuration of the main part of the facility presentation device 100 according to the first embodiment will be described.

FIGS. 3A and 3B are diagrams each illustrating an exemplary hardware configuration of the main part of the facility presentation device 100 according to the first embodiment.

As illustrated in FIG. 3A, the facility presentation device 100 includes a computer, and the computer includes a processor 301 and a memory 302.

The memory 302 stores a program for causing the computer to function as the departure place acquiring unit 110, the available facility acquiring unit 120, the guidance basics acquiring unit 130, the priority determining unit 140, the available facility list acquiring unit 190, the available facility list outputting unit 199, the transportation means acquiring unit 131, the transportation fare acquiring unit 150, the total amount acquiring unit 151, the travel time acquiring unit 160, the corrected transportation fare acquiring unit 170, the corrected total amount acquiring unit 171, the desired use period acquiring unit 180, the desired condition acquiring unit 181, the reservation application acquiring unit 182, and the reservation procedure unit 183. With the processor 301 reading and executing the program stored in the memory 302, the departure place acquiring unit 110, the available facility acquiring unit 120, the guidance basics acquiring unit 130, the priority determining unit 140, the available facility list acquiring unit 190, the available facility list outputting unit 199, the transportation means acquiring unit 131, the transportation fare acquiring unit 150, the total amount acquiring unit 151, the travel time acquiring unit 160, the corrected transportation fare acquiring unit 170, the corrected total amount acquiring unit 171, the desired use period acquiring unit 180, the desired condition acquiring unit 181, the reservation application acquiring unit 182, and the reservation procedure unit 183 are implemented.

Alternatively, as illustrated in FIG. 3B, the facility presentation device 100 may include a processing circuit 303. In this case, the functions of the departure place acquiring unit 110, the available facility acquiring unit 120, the guidance basics acquiring unit 130, the priority determining unit 140, the available facility list acquiring unit 190, the available facility list outputting unit 199, the transportation means acquiring unit 131, the transportation fare acquiring unit 150, the total amount acquiring unit 151, the travel time acquiring unit 160, the corrected transportation fare acquiring unit 170, the corrected total amount acquiring unit 171, the desired use period acquiring unit 180, the desired condition acquiring unit 181, the reservation application acquiring unit 182, and the reservation procedure unit 183 may be implemented by the processing circuit 303.

Further alternatively, the facility presentation device 100 may include the processor 301, the memory 302, and the processing circuit 303 (not illustrated). In this case, some of the functions of the departure place acquiring unit 110, the available facility acquiring unit 120, the guidance basics acquiring unit 130, the priority determining unit 140, the available facility list acquiring unit 190, the available facility list outputting unit 199, the transportation means acquiring unit 131, the transportation fare acquiring unit 150, the total amount acquiring unit 151, the travel time acquiring unit 160, the corrected transportation fare acquiring unit 170, the corrected total amount acquiring unit 171, the desired use period acquiring unit 180, the desired condition acquiring unit 181, the reservation application acquiring unit 182, and the reservation procedure unit 183 may be implemented by the processor 301 and the memory 302, and the remaining functions may be implemented by the processing circuit 303.

As the processor 301, for example, a central processing unit (CPU), a graphics processing unit (GPU), a microprocessor, a micro controller, or a digital signal processor (DSP) is used.

As the memory 302, for example, a semiconductor memory or a magnetic disk is used. More specifically, as the memory 302, for example, a random access memory (RAM), a read only memory (ROM), a flash memory, an erasable programmable read only memory (EPROM), an electrically erasable programmable read-only memory (EEPROM), a solid state drive (SSD), or a hard disk drive (HDD) is used.

The processing circuit 303 includes, for example, an application specific integrated circuit (ASIC), a programmable logic device (PLD), a field-programmable gate array (FPGA), a system-on-a-chip (SoC), or a system large-scale integration (LSI).

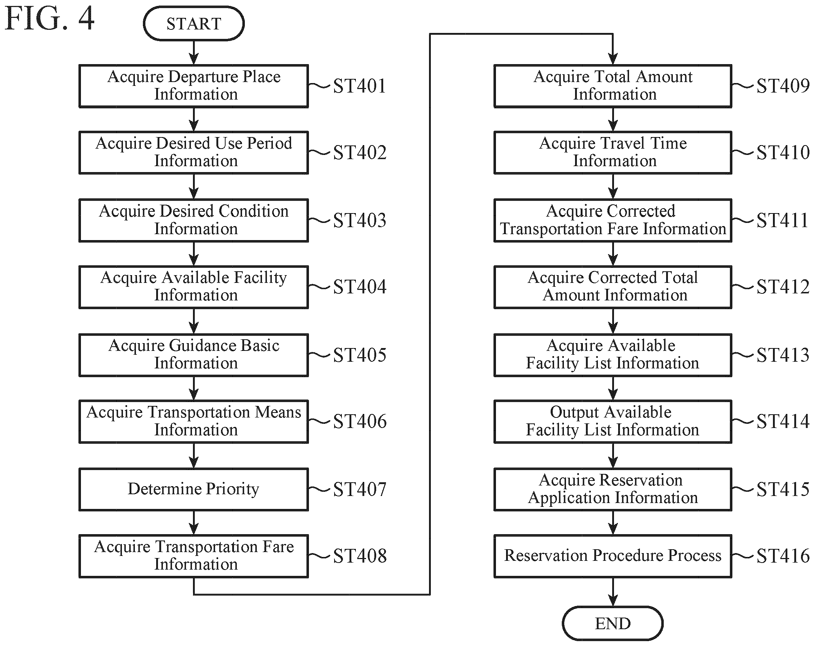

The operation of the facility presentation device 100 according to the first embodiment will be described with reference to FIG. 4.

FIG. 4 is a flowchart illustrating an example of processes of the facility presentation device 100 according to the first embodiment. The facility presentation device 100 repeatedly executes the processes of the flowchart.

First, in step ST401, the departure place acquiring unit 110 acquires the departure place information.

Next, in step ST402, the desired use period acquiring unit 180 acquires the desired use period information.

Next, in step ST403, the desired condition acquiring unit 181 acquires the desired condition information.

Next, in step ST404, the available facility acquiring unit 120 acquires the available facility information.

Next, in step ST405, the guidance basics acquiring unit 130 acquires the guidance basic information.

Next, in step ST406, the transportation means acquiring unit 131 acquires the transportation means information.

Next, in step ST407, the priority determining unit 140 determines the priority of the facility that the business operator wants to guide to.

Next, in step ST408, the transportation fare acquiring unit 150 acquires the transportation fare information.

Next, in step ST409, the total amount acquiring unit 151 acquires the total amount information.

Next, in step ST410, the travel time acquiring unit 160 acquires the travel time information.

Next, in step ST411, the corrected transportation fare acquiring unit 170 acquires the corrected transportation fare information.

Next, in step ST412, the corrected total amount acquiring unit 171 acquires the corrected total amount information.

Next, in step ST413, the available facility list acquiring unit 190 acquires the available facility list information.

Next, in step ST414, the available facility list outputting unit 199 outputs the available facility list information.

Next, in step ST415, the reservation application acquiring unit 182 acquires the reservation application information.

Next, in step ST416, the reservation procedure unit 183 performs the reservation procedure process.

After step ST416, the facility presentation device 100 ends the processes of the flowchart.

As described above, the facility presentation device 100 according to the first embodiment includes: the departure place acquiring unit 110 that acquires the departure place information indicating the departure place; the available facility acquiring unit 120 that searches for available facilities on the basis of the departure place information acquired by the departure place acquiring unit 110 and acquires available facility information for each facility indicating one or more available facilities obtained as a search result, the available facility information including facility name information indicating the name of a facility corresponding to the available facility information; the guidance basics acquiring unit 130 that acquires guidance basic information regarding the facility that the business operator wants to guide to; the priority determining unit 140 that determines the priority of the facility that the business operator wants to guide to on the basis of the guidance basic information acquired by the guidance basics acquiring unit 130; the available facility list acquiring unit 190 that acquires available facility list information in which one or more pieces of available facility information acquired by the available facility acquiring unit 120 are arranged on the basis of the priority determined by the priority determining unit 140; and the available facility list outputting unit 199 that outputs the available facility list information acquired by the available facility list acquiring unit 190.

With this configuration, the facility presentation device 100 can guide the user to use the facility that the business operator wants the user to use.

Furthermore, in addition to the above-described configuration, the facility presentation device 100 according to the first embodiment further includes: the transportation fare acquiring unit 150 that acquires the transportation fare information indicating the transportation fare required for traveling from the departure place indicated by the departure place information to the location indicated by the location information on the basis of the departure place information acquired by the departure place acquiring unit 110 and the location information included in the available facility information for each of facilities corresponding to the one or more pieces of available facility information acquired by the available facility acquiring unit 120, in which each of the one or more pieces of available facility information acquired by the available facility acquiring unit 120 includes the location information indicating the location of a facility corresponding to the available facility information, and the priority determining unit 140 determines the priority of the facility that the business operator wants to guide to on the basis of the transportation fare information acquired by the transportation fare acquiring unit 150 in addition to the guidance basic information acquired by the guidance basics acquiring unit 130.

With this configuration, the facility presentation device 100 can cause the display unit included in the user terminal 10 to display the available facility information indicating the facility that the business operator wants to guide to at a high rank with consideration to the transportation fare required for traveling from the departure place to the location. Therefore, the facility presentation device 100 can increase the probability that the user uses the facility that the business operator wants the user to use. As a result, the facility presentation device 100 can guide the user to use the facility that the business operator wants the user to use.

In addition, in the facility presentation device 100 according to the first embodiment, in the above-described configuration, the available facility list acquiring unit 190 acquires the available facility list information in which the transportation fare information acquired by the transportation fare acquiring unit 150 is arranged in association with the available facility information when acquiring the available facility list information.

With this configuration, the facility presentation device 100 can cause the display unit included in the user terminal 10 to display the available facility information indicating the facility that the business operator wants to guide to at a high rank with consideration to the transportation fare required for traveling from the departure place to the location. Furthermore, the facility presentation device 100 can cause the display unit included in the user terminal 10 to display the transportation fare information in association with the available facility information. Therefore, the facility presentation device 100 can increase the probability that the user uses the facility that the business operator wants the user to use while allowing the user to compare the transportation fare required for traveling to the facility. As a result, the facility presentation device 100 can guide the user to use the facility that the business operator wants the user to use.

Furthermore, in addition to the above-described configuration, the facility presentation device 100 according to the first embodiment further includes: the transportation fare acquiring unit 150 that acquires the transportation fare information indicating the transportation fare required for traveling from the departure place indicated by the departure place information to the location indicated by the location information on the basis of the departure place information acquired by the departure place acquiring unit 110 and the location information included in the available facility information for each of the facilities corresponding to the one or more pieces of available facility information acquired by the available facility acquiring unit 120; and the total amount acquiring unit 151 that calculates a total amount of the transportation fare indicated by the transportation fare information acquired by the transportation fare acquiring unit 150 and the charge indicated by the charge information included in the available facility information and acquires the total amount information indicating the calculated total amount, in which each of the one or more pieces of available facility information acquired by the available facility acquiring unit 120 includes the location information indicating the location of a facility corresponding to the available facility information and the charge information indicating the charge of a facility corresponding to the available facility information, and the priority determining unit 140 determines the priority of the facility that the business operator wants to guide to on the basis of the total amount information acquired by the total amount acquiring unit 151 in addition to the guidance basic information acquired by the guidance basics acquiring unit 130.

With this configuration, the facility presentation device 100 can cause the display unit included in the user terminal 10 to display the available facility information indicating the facility that the business operator wants to guide to at a high rank with consideration to the total amount indicated by the total amount information. Therefore, the facility presentation device 100 can increase the probability that the user uses the facility that the business operator wants the user to use. As a result, the facility presentation device 100 can guide the user to use the facility that the business operator wants the user to use.

In addition, in the facility presentation device 100 according to the first embodiment, in the above-described configuration, the available facility list acquiring unit 190 acquires the available facility list information in which the total amount information acquired by the total amount acquiring unit 151 is arranged in association with the available facility information when acquiring the available facility list information.

With this configuration, the facility presentation device 100 can cause the display unit included in the user terminal 10 to display the available facility information indicating the facility that the business operator wants to guide to at a high rank with consideration to the total amount indicated by the total amount information. Furthermore, the facility presentation device 100 can cause the display unit included in the user terminal 10 to display the total amount information in association with the available facility information. Therefore, the facility presentation device 100 can increase the probability that the user uses the facility that the business operator wants the user to use while allowing the user to compare the total amount required for using the facility. As a result, the facility presentation device 100 can guide the user to use the facility that the business operator wants the user to use.

Furthermore, in addition to the above-described configuration, the facility presentation device 100 according to the first embodiment further includes: the travel time acquiring unit 160 that acquires the travel time information indicating the travel time required for traveling from the departure place indicated by the departure place information to the location indicated by the location information on the basis of the departure place information acquired by the departure place acquiring unit 110 and the location information included in the available facility information for each of the available facilities indicated by the one or more pieces of available facility information acquired by the available facility acquiring unit 120, in which each of the one or more pieces of available facility information acquired by the available facility acquiring unit 120 includes the location information indicating the location corresponding to the available facility information, and the priority determining unit 140 determines the priority of the facility that the business operator wants to guide to on the basis of the travel time information acquired by the travel time acquiring unit 160 in addition to the guidance basic information acquired by the guidance basics acquiring unit 130.

With this configuration, the facility presentation device 100 can cause the display unit included in the user terminal 10 to display the available facility information indicating the facility that the business operator wants to guide to at a high rank with consideration to the travel time required for traveling from the departure place to the location. Therefore, the facility presentation device 100 can increase the probability that the user uses the facility that the business operator wants the user to use. As a result, the facility presentation device 100 can guide the user to use the facility that the business operator wants the user to use.

In addition, in the facility presentation device 100 according to the first embodiment, in the above-described configuration, the available facility list acquiring unit 190 acquires the available facility list information in which the travel time information acquired by the travel time acquiring unit 160 is arranged in association with the available facility information when acquiring the available facility list information.

With this configuration, the facility presentation device 100 can cause the display unit included in the user terminal 10 to display the available facility information indicating the facility that the business operator wants to guide to at a high rank with consideration to the travel time required for traveling from the departure place to the location. Furthermore, the facility presentation device 100 can cause the display unit included in the user terminal 10 to display the travel time information in association with the available facility information. Therefore, the facility presentation device 100 can increase the probability that the user uses the facility that the business operator wants the user to use while allowing the user to compare the travel time required for traveling to the facility. As a result, the facility presentation device 100 can guide the user to use the facility that the business operator wants the user to use.

Furthermore, in addition to the above-described configuration, the facility presentation device 100 according to the first embodiment further includes: the transportation fare acquiring unit 150 that acquires the transportation fare information indicating the transportation fare required for traveling from the departure place indicated by the departure place information to the location indicated by the location information on the basis of the departure place information acquired by the departure place acquiring unit 110 and the location information included in the available facility information for each of the facilities corresponding to the one or more pieces of available facility information acquired by the available facility acquiring unit 120; and the corrected transportation fare acquiring unit 170 that acquires the corrected transportation fare information indicating the corrected transportation fare which is the transportation fare after correction obtained by correcting the transportation fare indicated by the transportation fare information acquired by the transportation fare acquiring unit 150 on the basis of the priority determined by the priority determining unit 140, in which each of the one or more pieces of available facility information acquired by the available facility acquiring unit 120 includes the location information indicating the location of a facility corresponding to the available facility information, and the available facility list acquiring unit 190 acquires the available facility list information in which the corrected transportation fare information acquired by the corrected transportation fare acquiring unit 170 is arranged in association with the available facility information when acquiring the available facility list information.

With this configuration, the price competitiveness of the facility that the business operator wants the user to use increases as compared to other facilities having a higher priority than the priority of the facility.

Furthermore, with this configuration, the facility presentation device 100 can cause the display unit included in the user terminal 10 to display the available facility information indicating the facility that the business operator wants to guide to at a high rank with consideration to the corrected transportation fare required for traveling from the departure place to the location. Furthermore, the facility presentation device 100 can cause the display unit included in the user terminal 10 to display the corrected transportation fare information in association with the available facility information. Therefore, the facility presentation device 100 can increase the probability that the user uses the facility that the business operator wants the user to use while allowing the user to compare the corrected transportation fare required for traveling to the facility. As a result, the facility presentation device 100 can guide the user to use the facility that the business operator wants the user to use.

Furthermore, in addition to the above-described configuration, the facility presentation device 100 according to the first embodiment further includes: the transportation fare acquiring unit 150 that acquires the transportation fare information indicating the transportation fare required for traveling from the departure place indicated by the departure place information to the location indicated by the location information on the basis of the departure place information acquired by the departure place acquiring unit 110 and the location information included in the available facility information for each of the facilities corresponding to the one or more pieces of available facility information acquired by the available facility acquiring unit 120; the corrected transportation fare acquiring unit 170 that acquires the corrected transportation fare information indicating the corrected transportation fare which is the transportation fare after correction obtained by correcting the transportation fare indicated by the transportation fare information acquired by the transportation fare acquiring unit 150 on the basis of the priority determined by the priority determining unit 140; and the corrected total amount acquiring unit 171 that acquires the corrected total amount information indicating a corrected total amount obtained by calculating the corrected total amount that is a total amount of the corrected transportation fare indicated by the corrected transportation fare information acquired by the corrected transportation fare acquiring unit 170 and the charge indicated by the charge information included in the available facility information, in which each of the one or more pieces of available facility information acquired by the available facility acquiring unit 120 includes the location information indicating the location of a facility corresponding to the available facility information and the charge information indicating the charge of the facility corresponding to the available facility information, and the available facility list acquiring unit 190 acquires the available facility list information in which the corrected total amount information acquired by the corrected total amount acquiring unit 171 is arranged in association with the available facility information when acquiring the available facility list information.

With this configuration, the price competitiveness of the facility that the business operator wants the user to use increases as compared to other facilities having a higher priority than the priority of the facility.

Furthermore, with this configuration, the facility presentation device 100 can cause the display unit included in the user terminal 10 to display the available facility information indicating the facility that the business operator wants to guide to at a high rank with consideration to the corrected total amount required for using the facility. Furthermore, the facility presentation device 100 can cause the display unit included in the user terminal 10 to display the corrected total amount information in association with the available facility information. Therefore, the facility presentation device 100 can increase the probability that the user uses the facility that the business operator wants the user to use while allowing the user to compare the corrected total amount required for using the facility. As a result, the facility presentation device 100 can guide the user to use the facility that the business operator wants the user to use.

Furthermore, in addition to the above-described configuration, the facility presentation device 100 according to the first embodiment further includes: the transportation fare acquiring unit 150 that acquires the transportation fare information indicating the transportation fare required for traveling from the departure place indicated by the departure place information to the location indicated by the location information on the basis of the departure place information acquired by the departure place acquiring unit 110 and the location information included in the available facility information for each of the facilities corresponding to the one or more pieces of available facility information acquired by the available facility acquiring unit 120; the total amount acquiring unit 151 that calculates a total amount of the transportation fare indicated by the transportation fare information acquired by the transportation fare acquiring unit 150 and the charge indicated by the charge information included in the available facility information and acquires the total amount information indicating the calculated total amount; the corrected total amount acquiring unit 171 that acquires the corrected total amount information indicating a corrected total amount that is a total amount after correction obtained by correcting the total amount indicated by the total amount information acquired by the total amount acquiring unit 151 on the basis of the priority determined by the priority determining unit 140, in which each of the one or more pieces of available facility information acquired by the available facility acquiring unit 120 includes the location information indicating the location of a facility corresponding to the available facility information and the charge information indicating the charge of the facility corresponding to the available facility information, and the available facility list acquiring unit 190 acquires the available facility list information in which the corrected total amount information acquired by the corrected total amount acquiring unit 171 is arranged in association with the available facility information when acquiring the available facility list information.

With this configuration, the price competitiveness of the facility that the business operator wants the user to use increases as compared to other facilities having a higher priority than the priority of the facility.

Furthermore, with this configuration, the facility presentation device 100 can cause the display unit included in the user terminal 10 to display the available facility information indicating the facility that the business operator wants to guide to at a high rank with consideration to the corrected total amount required for using the facility. Furthermore, the facility presentation device 100 can cause the display unit included in the user terminal 10 to display the corrected total amount information in association with the available facility information. Therefore, the facility presentation device 100 can increase the probability that the user uses the facility that the business operator wants the user to use while allowing the user to compare the corrected total amount required for using the facility. As a result, the facility presentation device 100 can guide the user to use the facility that the business operator wants the user to use.

Furthermore, in addition to the above-described configuration, the facility presentation device 100 according to the first embodiment further includes: the transportation fare acquiring unit 150 that acquires the transportation fare information indicating the transportation fare required for traveling from the departure place indicated by the departure place information to the location indicated by the location information on the basis of the departure place information acquired by the departure place acquiring unit 110 and the location information included in the available facility information for each of the facilities corresponding to the one or more pieces of available facility information acquired by the available facility acquiring unit 120; the travel time acquiring unit 160 that acquires the travel time information indicating the travel time required for traveling from the departure place indicated by the departure place information to the location indicated by the location information on the basis of the departure place information acquired by the departure place acquiring unit 110 and the location information included in the available facility information for each of available facilities indicated by the one or more pieces of available facility information acquired by the available facility acquiring unit 120; the corrected transportation fare acquiring unit 170 that acquires the corrected transportation fare information indicating the corrected transportation fare which is the transportation fare after correction obtained by correcting the transportation fare indicated by the transportation fare information acquired by the transportation fare acquiring unit 150 on the basis of the priority determined by the priority determining unit 140 and the travel time information acquired by the travel time acquiring unit 160, in which each of the one or more pieces of available facility information acquired by the available facility acquiring unit 120 includes the location information indicating the location corresponding to the available facility information, and the available facility list acquiring unit 190 acquires the available facility list information in which the corrected transportation fare information acquired by the corrected transportation fare acquiring unit 170 is arranged in association with the available facility information when acquiring the available facility list information.

With this configuration, the price competitiveness of the facility that the business operator wants the user to use increases as compared to other facilities in which the travel time required for traveling to the facilities is short as compared to traveling to the facility.

Furthermore, with this configuration, the facility presentation device 100 can cause the display unit included in the user terminal 10 to display the available facility information indicating the facility that the business operator wants to guide to at a high rank with consideration to the corrected transportation fare required for traveling from the departure place to the location. Furthermore, the facility presentation device 100 can cause the display unit included in the user terminal 10 to display the corrected transportation fare information in association with the available facility information. Therefore, the facility presentation device 100 can increase the probability that the user uses the facility that the business operator wants the user to use while allowing the user to compare the corrected transportation fare required for traveling to the facility. As a result, the facility presentation device 100 can guide the user to use the facility that the business operator wants the user to use.

Furthermore, in addition to the above-described configuration, the facility presentation device 100 according to the first embodiment further includes: the transportation fare acquiring unit 150 that acquires the transportation fare information indicating the transportation fare required for traveling from the departure place indicated by the departure place information to the location indicated by the location information on the basis of the departure place information acquired by the departure place acquiring unit 110 and the location information included in the available facility information for each of facilities corresponding to the one or more pieces of available facility information acquired by the available facility acquiring unit 120; the travel time acquiring unit 160 that acquires the travel time information indicating the travel time required for traveling from the departure place indicated by the departure place information to the location indicated by the location information on the basis of the departure place information acquired by the departure place acquiring unit 110 and the location information included in the available facility information for each of the available facilities indicated by the one or more pieces of available facility information acquired by the available facility acquiring unit 120; the corrected transportation fare acquiring unit 170 that acquires the corrected transportation fare information indicating the corrected transportation fare which is the transportation fare after correction obtained by correcting the transportation fare indicated by the transportation fare information acquired by the transportation fare acquiring unit 150 on the basis of the priority determined by the priority determining unit 140 and the travel time information acquired by the travel time acquiring unit 160; and the corrected total amount acquiring unit 171 that acquires the corrected total amount information indicating a corrected total amount obtained by calculating the corrected total amount that is a total amount of the corrected transportation fare indicated by the corrected transportation fare information acquired by the corrected transportation fare acquiring unit 170 and the charge indicated by the charge information included in the available facility information, in which each of the one or more pieces of available facility information acquired by the available facility acquiring unit 120 includes the location information indicating the location of a facility corresponding to the available facility information and the charge information indicating the charge of the facility corresponding to the available facility information, and the available facility list acquiring unit 190 acquires the available facility list information in which the corrected total amount information acquired by the corrected total amount acquiring unit 171 is arranged in association with the available facility information when acquiring the available facility list information.

With this configuration, the price competitiveness of the facility that the business operator wants the user to use increases as compared to other facilities in which the travel time required for traveling to the facilities is short as compared to traveling to the facility.

Furthermore, with this configuration, the facility presentation device 100 can cause the display unit included in the user terminal 10 to display the available facility information indicating the facility that the business operator wants to guide to at a high rank with consideration to the corrected total amount required for using the facility. Furthermore, the facility presentation device 100 can cause the display unit included in the user terminal 10 to display the corrected total amount information in association with the available facility information. Therefore, the facility presentation device 100 can increase the probability that the user uses the facility that the business operator wants the user to use while allowing the user to compare the corrected total amount required for using the facility. As a result, the facility presentation device 100 can guide the user to use the facility that the business operator wants the user to use.

Furthermore, in addition to the above-described configuration, the facility presentation device 100 according to the first embodiment further includes: the transportation fare acquiring unit 150 that acquires the transportation fare information indicating the transportation fare required for traveling from the departure place indicated by the departure place information to the location indicated by the location information on the basis of the departure place information acquired by the departure place acquiring unit 110 and the location information included in the available facility information for each of the facilities corresponding to the one or more pieces of available facility information acquired by the available facility acquiring unit 120; the travel time acquiring unit 160 that acquires the travel time information indicating the travel time required for traveling from the departure place indicated by the departure place information to the location indicated by the location information on the basis of the departure place information acquired by the departure place acquiring unit 110 and the location information included in the available facility information for each of the available facilities indicated by the one or more pieces of available facility information acquired by the available facility acquiring unit 120; the total amount acquiring unit 151 that calculates a total amount of the transportation fare indicated by the transportation fare information acquired by the transportation fare acquiring unit 150 and the charge indicated by the charge information included in the available facility information and acquires the total amount information indicating the calculated total amount; and the corrected total amount acquiring unit 171 that acquires the corrected total amount information indicating a corrected total amount that is a total amount after correction obtained by correcting the total amount indicated by the total amount information acquired by the total amount acquiring unit 151 on the basis of the priority determined by the priority determining unit 140 and the travel time information acquired by the travel time acquiring unit 160, in which each of the one or more pieces of available facility information acquired by the available facility acquiring unit 120 includes the location information indicating the location of a facility corresponding to the available facility information and the charge information indicating the charge of the facility corresponding to the available facility information, and the available facility list acquiring unit 190 acquires the available facility list information in which the corrected total amount information acquired by the corrected total amount acquiring unit 171 is arranged in association with the available facility information when acquiring the available facility list information.

With this configuration, the price competitiveness of the facility that the business operator wants the user to use increases as compared to other facilities in which the travel time required for traveling to the facilities is short as compared to traveling to the facility.

Furthermore, with this configuration, the facility presentation device 100 can cause the display unit included in the user terminal 10 to display the available facility information indicating the facility that the business operator wants to guide to at a high rank with consideration to the corrected total amount required for using the facility. Furthermore, the facility presentation device 100 can cause the display unit included in the user terminal 10 to display the corrected total amount information in association with the available facility information. Therefore, the facility presentation device 100 can increase the probability that the user uses the facility that the business operator wants the user to use while allowing the user to compare the corrected total amount required for using the facility. As a result, the facility presentation device 100 can guide the user to use the facility that the business operator wants the user to use.

In addition, in addition to the above-described configuration, the facility presentation device 100 according to the first embodiment further includes the desired use period acquiring unit 180 that acquires the desired use period information indicating the desired use period of a facility, and the available facility acquiring unit 120 searches for an available facility on the basis of the desired use period information acquired by the desired use period acquiring unit 180 in addition to the departure place information.

With this configuration, the facility presentation device 100 can guide the user to use the facility that the business operator wants the user to use in the desired use period.

In addition to the above-described configuration, the facility presentation device 100 according to the first embodiment further includes the desired use period acquiring unit 180 that acquires the desired use period information indicating the desired use period of a facility, in which the guidance basics acquiring unit 130 acquires the guidance basic information corresponding to the desired use period of the facility indicated by the desired use period information acquired by the desired use period acquiring unit 180.

With this configuration, the facility presentation device 100 can guide the user to use the facility that the business operator wants the user to use in the desired use period.

In addition, the facility presentation device 100 according to the first embodiment includes the desired condition acquiring unit 181 that acquires the desired condition information indicating desired equipment installed in the facility or desired service provided in the facility, in which the available facility acquiring unit 120 searches for an available facility on the basis of the desired condition information acquired by the desired condition acquiring unit 181 in addition to the departure place information.

With this configuration, the facility presentation device 100 can guide the user to use the facility that the business operator wants the user to use from among facilities having the desired equipment or facilities in which the desired service is provided.

In addition, in the above-described configuration, in the facility presentation device 100 according to the first embodiment, the guidance basic information acquired by the guidance basics acquiring unit 130 includes the facility congestion information indicating a congestion status for each facility, the surrounding congestion information indicating a congestion status in the surroundings of each facility, the event information indicating an event that is held in the surroundings of each facility and that the business operator wants to guide to, or the shop information indicating a shop that is in the surroundings of each facility and that the business operator wants to guide to.

With this configuration, the facility presentation device 100 can guide the user to use the facility that the business operator wants the user to use.

Furthermore, in addition to the above-described configuration, the facility presentation device 100 according to the first embodiment further includes: the transportation means acquiring unit 131 that acquires the transportation means information indicating the transportation means for traveling from the departure place indicated by the departure place information to the location indicated by the location information on the basis of the departure place information acquired by the departure place acquiring unit 110 and the location information included in the available facility information for each of the facilities corresponding to the one or more pieces of available facility information acquired by the available facility acquiring unit 120, in which each of the one or more pieces of available facility information acquired by the available facility acquiring unit 120 includes the location information indicating the location of a facility corresponding to the available facility information, the guidance basic information acquired by the guidance basics acquiring unit 130 is transportation means congestion information indicating a congestion status of the transportation means, and the priority determining unit 140 determines the priority of the facility that the business operator wants to guide to on the basis of the transportation means information acquired by the transportation means acquiring unit 131 in addition to the transportation means congestion information that is the guidance basic information acquired by the guidance basics acquiring unit 130.

With this configuration, the facility presentation device 100 can guide the user to use the facility that the business operator wants the user to use.

In addition to the above-described configuration, the facility presentation device 100 according to the first embodiment further includes: the reservation application acquiring unit 182 that acquires reservation application information indicating a reservation application for using a facility corresponding to available facility information selected from among the one or more pieces of available facility information acquired by the available facility acquiring unit 120; and the reservation procedure unit 183 that performs the reservation procedure process for using the facility on the basis of the reservation application information acquired by the reservation application acquiring unit 182.

With this configuration, the facility presentation device 100 can perform the reservation procedure process for using the facility in response to a request from the user while guiding the user to use the facility that the business operator wants the user to use.

Note that the present disclosure can include modifications of any component of the embodiments or omission of any component of the embodiments within the scope of the disclosure.

### INDUSTRIAL APPLICABILITY

A facility presentation device of the present disclosure can be applied to a facility presentation system.

### REFERENCE SIGNS LIST

1: facility presentation system, 10: user terminal, 20: storage device, 70: network, 100: facility presentation device, 110: departure place acquiring unit, 120: available facility acquiring unit, 130: guidance basics acquiring unit, 131: transportation means acquiring unit, 140: priority determining unit, 150: transportation fare acquiring unit, 151: total amount acquiring unit, 160: travel time acquiring unit, 170: corrected transportation fare acquiring unit, 171: corrected total amount acquiring unit, 180: desired use period acquiring unit, 181: desired condition acquiring unit, 182: reservation application acquiring unit, 183: reservation procedure unit, 190: available facility list acquiring unit, 199: available facility list outputting unit, 301: processor, 302: memory, 303: processing circuit

## Claims

1. A facility presentation device comprising:
a departure place acquiring unit to acquire departure place information indicating a departure place;
an available facility acquiring unit to search for an available facility on a basis of the departure place information acquired by the departure place acquiring unit and to acquire available facility information for each of the facilities, the available facility information indicating one or more of the available facilities obtained as a search result, the available facility information including facility name information indicating a name of the facility corresponding to the available facility information;
a guidance basics acquiring unit to acquire guidance basic information regarding the facility that a business operator wants to guide to;
a priority determining unit to determine a priority of the facility that the business operator wants to guide to on a basis of the guidance basic information acquired by the guidance basics acquiring unit;
an available facility list acquiring unit to acquire available facility list information in which one or more pieces of the available facility information acquired by the available facility acquiring unit are arranged on a basis of the priority determined by the priority determining unit; and
an available facility list outputting unit to output the available facility list information acquired by the available facility list acquiring unit.

2. The facility presentation device according to claim 1, further comprising:
a transportation fare acquiring unit to acquire transportation fare information indicating a transportation fare required for traveling from the departure place indicated by the departure place information to a location indicated by location information on a basis of the departure place information acquired by the departure place acquiring unit and the location information included in the available facility information for each of the facilities corresponding to one of the one or more pieces of available facility information acquired by the available facility acquiring unit,
wherein each of the one or more pieces of available facility information acquired by the available facility acquiring unit includes the location information indicating the location of the facility corresponding to the available facility information, and
the priority determining unit determines the priority of the facility that the business operator wants to guide to on a basis of the transportation fare information acquired by the transportation fare acquiring unit in addition to the guidance basic information acquired by the guidance basics acquiring unit.

3. The facility presentation device according to claim 2,
wherein the available facility list acquiring unit acquires the available facility list information in which the transportation fare information acquired by the transportation fare acquiring unit is arranged in association with the available facility information when acquiring the available facility list information.

4. The facility presentation device according to claim 1, further comprising:
a transportation fare acquiring unit to acquire transportation fare information indicating a transportation fare required for traveling from the departure place indicated by the departure place information to a location indicated by location information on a basis of the departure place information acquired by the departure place acquiring unit and the location information included in the available facility information for each of the facilities corresponding to one of the one or more pieces of available facility information acquired by the available facility acquiring unit; and
a total amount acquiring unit to calculate a total amount of the transportation fare indicated by the transportation fare information acquired by the transportation fare acquiring unit and a charge indicated by charge information included in the available facility information and to acquire total amount information indicating the total amount that has been calculated,
wherein each of the one or more pieces of available facility information acquired by the available facility acquiring unit includes the location information indicating the location of the facility corresponding to the available facility information and the charge information indicating the charge of the facility corresponding to the available facility information, and
the priority determining unit determines the priority of the facility that the business operator wants to guide to on a basis of the total amount information acquired by the total amount acquiring unit in addition to the guidance basic information acquired by the guidance basics acquiring unit.

5. The facility presentation device according to claim 4,
wherein the available facility list acquiring unit acquires the available facility list information in which the total amount information acquired by the total amount acquiring unit is arranged in association with the available facility information when acquiring the available facility list information.

6. The facility presentation device according to claim 1, further comprising:
a travel time acquiring unit to acquire travel time information indicating a travel time required for traveling from the departure place indicated by the departure place information to a location indicated by location information on a basis of the departure place information acquired by the departure place acquiring unit and the location information included in the available facility information for each of the available facilities indicated by one of the one or more pieces of available facility information acquired by the available facility acquiring unit,
wherein each of the one or more pieces of available facility information acquired by the available facility acquiring unit includes the location information indicating the location corresponding to the available facility information, and
the priority determining unit determines the priority of the facility that the business operator wants to guide to on a basis of the travel time information acquired by the travel time acquiring unit in addition to the guidance basic information acquired by the guidance basics acquiring unit.

7. The facility presentation device according to claim 6,
wherein the available facility list acquiring unit acquires the available facility list information in which the travel time information acquired by the travel time acquiring unit is arranged in association with the available facility information when acquiring the available facility list information.

8. The facility presentation device according to claim 1, further comprising:
a transportation fare acquiring unit to acquire transportation fare information indicating a transportation fare required for traveling from the departure place indicated by the departure place information to a location indicated by location information on a basis of the departure place information acquired by the departure place acquiring unit and the location information included in the available facility information for each of the facilities corresponding to one of the one or more pieces of available facility information acquired by the available facility acquiring unit; and
a corrected transportation fare acquiring unit to acquire corrected transportation fare information indicating a corrected transportation fare which is the transportation fare after correction obtained by correcting the transportation fare indicated by the transportation fare information acquired by the transportation fare acquiring unit on a basis of the priority determined by the priority determining unit,
wherein each of the one or more pieces of available facility information acquired by the available facility acquiring unit includes the location information indicating the location of the facility corresponding to the available facility information, and
the available facility list acquiring unit acquires the available facility list information in which the corrected transportation fare information acquired by the corrected transportation fare acquiring unit is arranged in association with the available facility information when acquiring the available facility list information.

9. The facility presentation device according to claim 1, further comprising:
a transportation fare acquiring unit to acquire transportation fare information indicating a transportation fare required for traveling from the departure place indicated by the departure place information to a location indicated by location information on a basis of the departure place information acquired by the departure place acquiring unit and the location information included in the available facility information for each of the facilities corresponding to one of the one or more pieces of available facility information acquired by the available facility acquiring unit;
a corrected transportation fare acquiring unit to acquire corrected transportation fare information indicating a corrected transportation fare which is the transportation fare after correction obtained by correcting the transportation fare indicated by the transportation fare information acquired by the transportation fare acquiring unit on a basis of the priority determined by the priority determining unit; and
a corrected total amount acquiring unit to acquire corrected total amount information indicating a corrected total amount obtained by calculating the corrected total amount which is a total amount of the corrected transportation fare indicated by the corrected transportation fare information acquired by the corrected transportation fare acquiring unit and a charge indicated by charge information included in the available facility information,
wherein each of the one or more pieces of available facility information acquired by the available facility acquiring unit includes the location information indicating the location of the facility corresponding to the available facility information and the charge information indicating the charge of the facility corresponding to the available facility information, and
the available facility list acquiring unit acquires the available facility list information in which the corrected total amount information acquired by the corrected total amount acquiring unit is arranged in association with the available facility information when acquiring the available facility list information.

10. The facility presentation device according to claim 1, further comprising:
a transportation fare acquiring unit to acquire transportation fare information indicating a transportation fare required for traveling from the departure place indicated by the departure place information to a location indicated by location information on a basis of the departure place information acquired by the departure place acquiring unit and the location information included in the available facility information for each of the facilities corresponding to one of the one or more pieces of available facility information acquired by the available facility acquiring unit;
a total amount acquiring unit to calculate a total amount of the transportation fare indicated by the transportation fare information acquired by the transportation fare acquiring unit and a charge indicated by charge information included in the available facility information and to acquire total amount information indicating the total amount that has been calculated; and
a corrected total amount acquiring unit to acquire corrected total amount information indicating a corrected total amount that is the total amount after correction obtained by correcting the total amount indicated by the total amount information acquired by the total amount acquiring unit on a basis of the priority determined by the priority determining unit,
wherein each of the one or more pieces of available facility information acquired by the available facility acquiring unit includes the location information indicating the location of the facility corresponding to the available facility information and the charge information indicating the charge of the facility corresponding to the available facility information, and
the available facility list acquiring unit acquires the available facility list information in which the corrected total amount information acquired by the corrected total amount acquiring unit is arranged in association with the available facility information when acquiring the available facility list information.

11. The facility presentation device according to claim 1, further comprising:
a transportation fare acquiring unit to acquire transportation fare information indicating a transportation fare required for traveling from the departure place indicated by the departure place information to a location indicated by location information on a basis of the departure place information acquired by the departure place acquiring unit and the location information included in the available facility information for each of the facilities corresponding to one of the one or more pieces of available facility information acquired by the available facility acquiring unit;
a travel time acquiring unit to acquire travel time information indicating a travel time required for traveling from the departure place indicated by the departure place information to the location indicated by the location information on a basis of the departure place information acquired by the departure place acquiring unit and the location information included in the available facility information for each of the available facilities indicated by one of the one or more pieces of available facility information acquired by the available facility acquiring unit; and
a corrected transportation fare acquiring unit to acquire corrected transportation fare information indicating a corrected transportation fare which is the transportation fare after correction obtained by correcting the transportation fare indicated by the transportation fare information acquired by the transportation fare acquiring unit on a basis of the priority determined by the priority determining unit and the travel time information acquired by the travel time acquiring unit,
wherein each of the one or more pieces of available facility information acquired by the available facility acquiring unit includes the location information indicating the location corresponding to the available facility information, and
the available facility list acquiring unit acquires the available facility list information in which the corrected transportation fare information acquired by the corrected transportation fare acquiring unit is arranged in association with the available facility information when acquiring the available facility list information.

12. The facility presentation device according to claim 1, further comprising:
a transportation fare acquiring unit to acquire transportation fare information indicating a transportation fare required for traveling from the departure place indicated by the departure place information to a location indicated by location information on a basis of the departure place information acquired by the departure place acquiring unit and the location information included in the available facility information for each of the facilities corresponding to one of the one or more pieces of available facility information acquired by the available facility acquiring unit;
a travel time acquiring unit to acquire travel time information indicating a travel time required for traveling from the departure place indicated by the departure place information to the location indicated by the location information on a basis of the departure place information acquired by the departure place acquiring unit and the location information included in the available facility information for each of the available facilities indicated by one of the one or more pieces of available facility information acquired by the available facility acquiring unit;
a corrected transportation fare acquiring unit to acquire corrected transportation fare information indicating a corrected transportation fare which is the transportation fare after correction obtained by correcting the transportation fare indicated by the transportation fare information acquired by the transportation fare acquiring unit on a basis of the priority determined by the priority determining unit and the travel time information acquired by the travel time acquiring unit; and
a corrected total amount acquiring unit to acquire corrected total amount information indicating a corrected total amount obtained by calculating the corrected total amount which is a total amount of the corrected transportation fare indicated by the corrected transportation fare information acquired by the corrected transportation fare acquiring unit and a charge indicated by charge information included in the available facility information,
wherein each of the one or more pieces of available facility information acquired by the available facility acquiring unit includes the location information indicating the location of the facility corresponding to the available facility information and the charge information indicating the charge of the facility corresponding to the available facility information, and
the available facility list acquiring unit acquires the available facility list information in which the corrected total amount information acquired by the corrected total amount acquiring unit is arranged in association with the available facility information when acquiring the available facility list information.

13. The facility presentation device according to claim 1, further comprising:
a transportation fare acquiring unit to acquire transportation fare information indicating a transportation fare required for traveling from the departure place indicated by the departure place information to a location indicated by location information on a basis of the departure place information acquired by the departure place acquiring unit and the location information included in the available facility information for each of the facilities corresponding to one of the one or more pieces of available facility information acquired by the available facility acquiring unit;
a travel time acquiring unit to acquire travel time information indicating a travel time required for traveling from the departure place indicated by the departure place information to the location indicated by the location information on a basis of the departure place information acquired by the departure place acquiring unit and the location information included in the available facility information for each of the available facilities indicated by one of the one or more pieces of available facility information acquired by the available facility acquiring unit;
a total amount acquiring unit to calculate a total amount of the transportation fare indicated by the transportation fare information acquired by the transportation fare acquiring unit and a charge indicated by charge information included in the available facility information and to acquire total amount information indicating the total amount that has been calculated; and
a corrected total amount acquiring unit to acquire corrected total amount information indicating a corrected total amount that is the total amount after correction obtained by correcting the total amount indicated by the total amount information acquired by the total amount acquiring unit on a basis of the priority determined by the priority determining unit and the travel time information acquired by the travel time acquiring unit,
wherein each of the one or more pieces of available facility information acquired by the available facility acquiring unit includes the location information indicating the location of the facility corresponding to the available facility information and the charge information indicating the charge of the facility corresponding to the available facility information, and
the available facility list acquiring unit acquires the available facility list information in which the corrected total amount information acquired by the corrected total amount acquiring unit is arranged in association with the available facility information when acquiring the available facility list information.

14. The facility presentation device according to claim 1, further comprising:
a desired use period acquiring unit to acquire desired use period information indicating a desired use period of the facility,
wherein the available facility acquiring unit searches for the facility that is available on a basis of the desired use period information acquired by the desired use period acquiring unit in addition to the departure place information.

15. The facility presentation device according to claim 1, further comprising:
a desired use period acquiring unit to acquire desired use period information indicating a desired use period of the facility,
wherein the guidance basics acquiring unit acquires the guidance basic information corresponding to the desired use period of the facility indicated by the desired use period information acquired by the desired use period acquiring unit.

16. The facility presentation device according to claim 1, further comprising:
a desired condition acquiring unit to acquire desired condition information indicating desired equipment installed in the facility or desired service provided in the facility,
wherein the available facility acquiring unit searches for the facility that is available on a basis of the desired condition information acquired by the desired condition acquiring unit in addition to the departure place information.

17. The facility presentation device according to claim 1,
wherein the guidance basic information acquired by the guidance basics acquiring unit includes facility congestion information indicating a congestion status for each of the facilities, surrounding congestion information indicating a congestion status in surroundings of each of the facilities, event information indicating an event that is held in the surroundings of each of the facilities and that the business operator wants to guide to, or shop information indicating a shop that is in surroundings of each of the facilities and that the business operator wants to guide to.

18. The facility presentation device according to claim 1, further comprising:
a transportation means acquiring unit to acquire transportation means information indicating a transportation means for traveling from the departure place indicated by the departure place information to a location indicated by location information on a basis of the departure place information acquired by the departure place acquiring unit and the location information included in the available facility information for each of the facilities corresponding to one of the one or more pieces of available facility information acquired by the available facility acquiring unit,
wherein each of the one or more pieces of available facility information acquired by the available facility acquiring unit includes the location information indicating the location of the facility corresponding to the available facility information,
the guidance basic information acquired by the guidance basics acquiring unit is transportation means congestion information indicating a congestion status of the transportation means, and
the priority determining unit determines the priority of the facility that the business operator wants to guide to on a basis of the transportation means information acquired by the transportation means acquiring unit in addition to the transportation means congestion information that is the guidance basic information acquired by the guidance basics acquiring unit.

19. The facility presentation device according to claim 1, further comprising:
a reservation application acquiring unit to acquire reservation application information indicating a reservation application for using the facility corresponding to the available facility information selected from among the one or more pieces of available facility information acquired by the available facility acquiring unit; and
a reservation procedure unit to perform a reservation procedure process for using the facility on a basis of the reservation application information acquired by the reservation application acquiring unit.

20. A facility presentation method comprising:
a departure place acquiring step of acquiring, by a departure place acquiring unit, departure place information indicating a departure place;
an available facility acquiring step of searching for, by an available facility acquiring unit, an available facility on a basis of the departure place information acquired in the departure place acquiring step and acquiring available facility information for each of the facilities, the available facility information indicating one or more of the available facilities obtained as a search result, the available facility information including facility name information indicating a name of the facility corresponding to the available facility information;
a guidance basics acquiring step of acquiring, by a guidance basics acquiring unit, guidance basic information regarding the facility that a business operator wants to guide to;
a priority determining step of determining, by a priority determining unit, a priority of the facility that the business operator wants to guide to on a basis of the guidance basic information acquired in the guidance basics acquiring step;
an available facility list acquiring step of acquiring, by an available facility list acquiring unit, available facility list information in which one or more pieces of the available facility information acquired in the available facility acquiring step are arranged on a basis of the priority determined in the priority determining step; and
an available facility list outputting step of outputting, by an available facility list outputting unit, the available facility list information acquired in the available facility list acquiring step.
